# EUROPÄISCHE PATENTANMELDUNG

(11) **EP 1 215 854 A2**
(43) Veröffentlichungstag der Anmeldung: **19.06.2002**
(21) Anmeldenummer: 01128929.5
(22) Anmeldetag: 05.12.2001
(51) Int. Cl.: H04L 12/56, H04J 3/16

(54) **Verfahren zum Weiterleiten von Datenpaketen, Weiterleitungseinheit und zugehöriges Programm**

(30) Priorität: 14.12.2000 DE 10062375
(71) Anmelder: SIEMENS AKTIENGESELLSCHAFT, 80333 München (DE)
(72) Erfinder: Blumann, Karin, 85630 Neukeferloh (DE); Jedlitschka, Robert, 80686 München (DE); Wildmoser, Erich, 85296 Rohrbach (DE)

(57) **Zusammenfassung**

Erläutert wird unter anderem ein Verfahren, bei dem eine Bezugs-Weiterleitungseinheit (ISB) Datenpakete an eine Nachbar-Weiterleitungseinheit (ISW) weiterleitet. Wird von der Nachbar-Weiterleitungseinheit (ISW) ein Datenpaket empfangen, so wird in der Bezugs-Weiterleitungseinheit ISB überprüft, ob eine Übertragungsschleife vorliegt. Dabei wird geprüft, ob die Weiterleitungseinheit, von der ein Datenpaket empfangen wurde, diejenige Weiterleitungseinheit ist, an die dieses Datenpaket gesendet werden soll. Ist dies der Fall, so wird das Datenpaket nicht erneut über die Übertragungsstrecke 30 an die Nachbar-Weiterleitungseinheit (ISW) weitergeleitet. Die Erfindung eignet sich besonders für SDH-Netze (Synchronous Digital Hierarchy), bei denen sowohl statisches Routing als auch dynamisches Routing zum Einsatz kommt.

## Beschreibung

Die Erfindung betrifft ein Verfahren, bei dem eine Bezugs-Weiterleitungseinheit Datenpakete an eine Nachbar-Weiterleitungseinheit weiterleitet. Die Nachbar-Weiterleitungseinheit wird an Hand von in einem Datenpaket enthaltenen Lenkdaten gemäß einem ersten Weiterleitungsverfahren ermittelt. In der Bezugs-Weiterleitungseinheit wird über eine die beiden Weiterleitungseinheiten verbindende erste Übertragungsstrecke ein Datenpaket empfangen. An Hand der in dem Datenpaket enthaltenen Lenkdaten wird für das empfangene Datenpaket gemäß dem ersten Weiterleitungsverfahren eine Weiterleitungseinheit ermittelt, an die das Datenpaket anschließend übertragen werden soll.

Die Weiterleitungseinheiten werden in der Internet-Welt als Router bezeichnet. In der ISO-Welt (International Standardization Organisation) werden die Weiterleitungseinheiten als "intermediate" Systeme bezeichnet, die durch die Großbuchstaben IS abgekürzt werden, siehe beispielsweise Standard ISO/IEC 10589: 1992 "Information technology - Telecommunications and information exchange between systems - Intermediate system to Intermediate system intra-domain routeing information exchange protocol for use in conjunction with the protocol for providing the connectionless-mode Network Service (ISO 8473)". Eine Weiterleitungseinheit ist jeweils einem Netzwerk zugeordnet und verbindet die einzelnen Netzwerke untereinander.

Die Datenpakete haben üblicherweise einen Paketkopf und einen Paketrumpf. Im Paketkopf sind Lenkdaten zum Weiterleiten der Datenpakete enthalten. Beispielsweise sind die Lenkdaten eine Zieladresse oder ein Kennzeichen für einen virtuellen Verbindungspfad oder für einen virtuellen Verbindungskanal. Virtuell bedeutet, dass die Verbindung nur scheinbar, nämlich auf einer höheren Protokollebene existiert. Auf der untersten Protokollebene, d.h. auf der Bitübertragungsschicht besteht bei einer virtuellen Verbindung dagegen keine dauerhafte physikalische Verbindung.

Im Paketrumpf sind beispielsweise Nutzdaten enthalten, die von einem Nutzer des Netzes kommen. Es gibt aber auch Datenpakete, die Daten zum Aktualisieren von Weiterleitungsdaten enthalten, die für ein Weiterleitungsverfahren eingesetzt werden. Die Weiterleitungsverfahren werden auch als Routing (IP-Welt) oder Routeing (ISO-Welt) bezeichnet. Hier wird eine solche Unterscheidung nicht getroffen. Sollen auf höheren Protokollebenen Verbindungen aufgebaut werden, so enthält der Paketrumpf beispielsweise Verbindungsaufbaudaten.

Als Datenübertragungsnetz wird ein Datenpaketübertragungsnetz, ein asynchron arbeitendes Netz, ein synchron arbeitendes Netz oder ein plesiochron arbeitendes Datenübertragungsnetz eingesetzt. Beispiele für die genannten Netze sind das Internet, ein ATM-Netz (Asynchronous Transfer Mode) ein SDH-Netz (Synchronous Digital Hierarchy) oder ein PDH-Netz (Plesiochrone Digital Hierarchy).

Zum Weiterleiten der Datenpakete sind verschiedene Verfahren bekannt, die sich in statische Routing-Verfahren und dynamische Routing-Verfahren unterteilen lassen. Die dynamischen Routing-Verfahren unterteilen sich in Verfahren, die einen Distanzvektor verwenden und in Verfahren, die verbindungsstatusorientiert sind. Beispielsweise enthält der Defacto Standard RFC 2328 (Request For Comment) der IETF (Internet Engineering Task Force) eine Erläuterung zu einem verbindungsstatusorientierten Weiterleitungsverfahren, das als OSPF-Verfahren (Open Shortest Path First) bezeichnet wird. Im Standard ISO/IEC 10589 wird ein ähnliches Verfahren erläutert.

Beim Weiterleiten von Datenpaketen besteht die Gefahr, dass Datenpakete zwischen der Bezugs-Weiterleitungseinheit und der Nachbar-Weiterleitungseinheit hin und her übertragen werden, so dass eine Übertragungsschleife entsteht. Anschaulich lässt sich dieser Vorgang als ping-pong-Verfahren bezeichnen. Die Übertragungsschleife belastet das Datenübertragungsnetz oder einen Übertragungskanal für bestimmte Datenpakete übermäßig. Außerdem gelangt das Datenpaket nicht zu seinem Ziel. Um die Auswirkung einer Übertragungsschleife zu mindern wurden Datenelemente in die Datenpakete eingefügt, deren Wert bei jedem Weiterleitungsvorgang erhöht bzw. verringert wird. Ist ein Maximalwert bzw. Minimalwert erreicht, so wird das Datenpaket nicht mehr weiter vermittelt. Andererseits gibt es auch Verfahren, die das Entstehen von Übertragungsschleifen verhindern sollen. Beispielsweise werden Datenpakete mit Routing-Daten bei dem sogenannten "geteilten Horizont-Verfahren" (split horizon) nur unter bestimmten Bedingungen gesendet. Dadurch entstehen Weiterleitungsdaten, welche die Weiterleitung von Nutzdaten ohne Übertragungsschleifen ermöglichen.

Es ist Aufgabe der Erfindung, zur Weiterleitung von Datenpaketen ein weiteres, einfaches Verfahren anzugeben, das insbesondere eine übermäßige Belastung des Netzes durch Übertragungsschleifen vermeidet und das es insbesondere erlaubt, geeignete Maßnahmen zu ergreifen, um ein sich in einer Übertragungsschleife befindendes Datenpaket dennoch an sein Ziel zu übertragen. Außerdem sollen eine zugehörige Einheit und ein zugehöriges Programm angegeben werden.

Die auf das Verfahren bezogene Aufgabe wird durch die im Patentanspruch 1 angegebenen Verfahrensschritte gelöst. Weiterbildungen sind in den Unteransprüchen angegeben.

Beim erfindungsgemäßen Verfahren wird zusätzlich zu den eingangs genannten Verfahrensschritten das Datenpaket nur dann, z.B. über die erste Übertragungsstrecke, an die ermittelte Weiterleitungseinheit übertragen, wenn die ermittelte Weiterleitungseinheit nicht die Nachbar-Weiterleitungseinheit ist, d.h. die Weiterleitungseinheit von der das Datenpaket gekommen ist. Durch dieses Verfahren durchläuft das Datenpaket die Übertragungsschleife nur einmal. Nach dem ersten Durchlaufen der Übertragungsschleife wird bereits in der Bezugs-Weiterleitungseinheit festgestellt, dass eine Übertragungsschleife vorliegt. Dies ermöglicht es, das Datenpaket über alternative Übertragungsmöglichkeiten weiterzuleiten.

Es lassen sich in der Bezugs-Weiterleitungseinheit für jede Nachbar-Weiterleitungseinheit bzw. für jede Übertragungsstrecke, auf der Datenpakete ankommen, separate Prozesse zum Ermitteln der Weiterleitungseinheit einsetzen, an die das Datenpaket anschließend übertragen werden soll. Jeder Prozess ist einer Nachbar-Weiterleitungseinheit bzw. auf Grund der eindeutigen Zuordnung einer bidirektional übertragenden Übertragungsstrecke zugeordnet. Außerdem hat jeder Prozess seine eigenen Weiterleitungsdaten. Sind in den für die Weiterleitung genutzten Daten, die den Prozessen jeweils zugeordnete Weiterleitungseinheiten bzw. Übertragungsstrecken nicht aufgelistet, so lässt sich das Datenpaket implizit nicht mehr zu der Nachbar-Weiterleitungseinheit bzw. über die Übertragungsstrecke übertragen, von der das Datenpaket kam bzw. über die es zuvor empfangen worden ist. Somit lässt sich das erfindungsgemäße Verfahren auch ohne expliziten Prüfschritt ausführen. Es ist jedoch auch eine explizite Prüfung möglich.

Im einfachsten Fall wird beim erfindungsgemäßen Verfahren das empfangene Datenpaket bei Übereinstimmung von ermittelter Weiterleitungseinheit und Nachbar-Weiterleitungseinheit verworfen, d.h. nicht mehr weiter übertragen. Alternativ lässt sich jedoch nach dem gleichen Weiterleitungsverfahren wie das erste Weiterleitungsverfahren oder nach einem anderen Weiterleitungsverfahren eine andere Nachbar-Weiterleitungseinheit oder eine andere Übertragungsstrecke ermitteln.

Das erfindungsgemäße Verfahren lässt sich insbesondere an solchen Stellen einsetzen, an denen das Auftreten von Übertragungsschleifen erwartet wird. Alternativ oder kumulativ lässt sich das Verfahren auch nur zu Zeiten einsetzen, zu denen Übertragungsschleifen erwartet werden oder zu denen getestet werden soll, ob Übertragungsschleifen auftreten.

Bei einer Weiterbildung des erfindungsgemäßen Verfahrens wird in der Bezugs-Weiterleitungseinheit automatisch geprüft, ob die ermittelte Weiterleitungseinheit die Nachbar-Weiterleitungseinheit oder eine andere Weiterleitungseinheit ist. Die Prüfung erfolgt beispielsweise unter Einbeziehung der Adresse des Absenders. Diese Adresse bezeichnet die letzte Weiterleitungseinheit oder erlaubt es, die letzte Weiterleitungseinheit zu ermitteln. Abhängig vom Prüfergebnis wird das Datenpaket nur dann zur ersten Nachbar-Weiterleitungseinheit bzw. über die erste Übertragungsstrecke übertragen, wenn die ermittelte Weiterleitungseinheit nicht die erste Nachbar-Weiterleitungseinheit ist. Vor der Ausführung eines zentralen Weiterleitungsverfahrens lässt sich auch die Übertragungsstrecke zu jedem Datenpaket vermerken, über die es empfangen worden ist. Nach der Ermittlung einer nächsten Weiterleitungseinheit wird dann geprüft, ob für die folgende Übertragung die gleiche Übertragungsstrecke genutzt werden muss, auf der das Datenpaket empfangen worden ist. Werden separate Weiterleitungsprozesse genutzt, die keine Beschränkung bei der Ermittlung einer Weiterleitungseinheit haben, so prüft jeder Prozess am Ende des Weiterleitungsverfahrens, ob die ermittelte Übertragungsstrecke mit der ihm zugeordneten Übertragungsstrecke übereinstimmt.

Bei einer anderen Ausgestaltung ist die Bezugs-Weiterleitungseinheit eine Übergangseinheit zwischen verschiedenen Domänen, in denen voneinander verschiedene und/oder voneinander unabhängige Verfahren zur Erzeugung von Weiterleitungsdaten und/oder zur Weiterleitung ausgeführt werden. Die Domänen sind insbesondere voneinander verschiedene administrative Einheiten. Das bedeutet, dass der Administrator der einen Domäne nicht ohne weiteres Änderungen in der anderen Domäne vornehmen kann. Dazu benötigt er beispielsweise die Passwörter für den Zugriff auf beide Domänen.

Das Verfahren gemäß Weiterbildung wird also zum Weiterleiten von Datenpaketen zwischen verschiedenen Domänen eingesetzt, d.h. bei einem Inter-Domänen-Routing. Gerade bei den Inter-Domänen-Routing-Verfahren gibt es häufig Übertragungsschleifen, so dass der Einsatz des erfindungsgemäßen Verfahrens das Inter-Domänen-Routing erheblich verbessert.

Bei einer Weiterbildung wird in dem Fall, dass die ermittelte Weiterleitungseinheit die Nachbar-Weiterleitungseinheit ist, von der das Datenpaket kam, gemäß dem ersten Weiterleitungsverfahren an Hand der im Datenpaket enthaltenen Lenkdaten eine sich von der ersten Nachbar-Weiterleitungseinheit unterscheidende zweite Nachbar-Weiterleitungseinheit ermittelt, die sich in derselben Domäne wie die erste Nachbar-Weiterleitungseinheit befindet. Wird eine zweite Nachbar-Weiterleitungseinheit gefunden, so lässt sich das zuvor in der Übertragungsschleife übertragene Datenpaket dennoch an sein Ziel weiterleiten.

Alternativ oder kumulativ zu der vorstehend genannten Maßnahme wird bei einer anderen Weiterbildung in dem Fall, dass die ermittelte Weiterleitungseinheit die Nachbar-Weiterleitungseinheit ist, gemäß einem sich vom ersten Weiterleitungsverfahren unterscheidenden Verfahren an Hand der Lenkdaten eine alternative Übergangs-Weiterleitungseinheit ermittelt, die in derselben Domäne wie die Bezugs-Weiterleitungseinheit liegt und die eine Netzübergangseinheit zu einer Domäne ist, in der auch die erste Nachbar-Weiterleitungseinheit liegt. Die Domänen unterscheiden sich beispielsweise hinsichtlich des verwendeten Routing-Verfahrens und/oder hinsichtlich der Administrierbarkeit. Durch diese Maßnahme wird erreicht, dass durch Einbeziehung der Übergangs-Weiterleitungseinheit unter Umständen dennoch eine Übertragung des Datenpaketes zu seinem Ziel durchgeführt werden kann.

Bei einer Ausgestaltung wird das Datenpaket in der Bezugs-Weiterleitungseinheit durch Voranstellen eines Headers eingekapselt und an die alternative Übergangs-Weiterleitungseinheit übertragen. In der Übergangs-Weiterleitungseinheit wird das Datenpaket dann entkapselt, d.h. der Header wird entfernt, und das Datenpaket wird gemäß einem Weiterleitungsverfahren weitergeleitet, das dem ersten Weiterleitungsverfahren entspricht. Auf diese Weise lässt sich das Datenpaket auf einfache Art und mit geringen Änderungen der Programme in der Bezugs-Weiterleitungseinheit und in der Übergangs-Weiterleitungseinheit im Vergleich zu bisher eingesetzten Weiterleitungseinheiten ausführen.

Bei einer nächsten Weiterbildung sind die Bezugs-Weiterleitungseinheit und die Übergangs-Weiterleitungseinheit in einem Datenübertragungsnetz angeordnet, in welchem Weiterleitungsdaten gemäß Standard ISO 10589 erzeugt und/oder Datenpakete gemäß Standard ISO 10589 weiter geleitet werden. Gemäß dem Standard ISO 10589 gibt es ein Verfahren, das "partition repair" genannt wird. Im Rahmen dieses Verfahrens wird auch ein Einkapseln und Entkapseln von Datenpaketen eingesetzt. Damit lassen sich die Programme zum Entkapseln und Einkapseln für zwei verschiedene Zwecke einsetzen. Eine Neuprogrammierung dieser Programmteile zur Durchführung des erfindungsgemäßen Verfahrens bzw. seiner Weiterbildungen ist nicht erforderlich.

Bei einer nächsten Weiterbildung des erfindungsgemäßen Verfahrens liegen die Bezugs-Weiterleitungseinheit und die Übergangs-Weiterleitungseinheit in einem Datenübertragungsnetz mit dynamischem Routing-Verfahren. Die Weiterleitungseinheiten liegen unter Umständen in verschiedenen Areas, welche den Austausch von Nachrichten zur Erzeugung der Weiterleitungsdaten beschränken. Die Beschränkung erfolgt durch das Verwenden zweier Niveaus L1 und L2 innerhalb einer Domäne. Datenpakete zum Austausch von Weiterleitungsmöglichkeiten werden auf dem Niveau L1 nur zwischen allen Weiterleitungseinheiten einer Area ausgetauscht. Nur die Weiterleitungseinheiten des Niveaus L2 tauschen über die Grenzen von Areas hinweg Weiterleitungsdaten aus. Die Nachbar-Weiterleitungseinheit bzw. die Nachbar-Weiterleitungseinheiten liegen dagegen in einem SDH-Netz mit statischem Routing, d.h. die Weiterleitungsdaten wurden manuell erzeugt. Die Datenübertragungsnetze sind bei einer Ausgestaltung SDH-Netze (Synchronous Digital Hierarchy), siehe Standard G.707 der ITU-T (International Telecommunication Union - Telecommunication Standardization Sector). In den Anfangszeiten wurden SDH-Netze mit statischem Routing eingesetzt. Später wurden dann Routing-Verfahren mit dynamischem Routing für SDH-Netze eingesetzt. Beim Übergang von den alten SDH-Netzen zu den neuen SDH-Netzen gibt es eine Übergangszeit, in der durch den Einsatz des erfindungsgemäßen Verfahrens beide Netze gemeinsam genutzt werden können. Die weiterzuleitenden Datenpakete werden bei SDH-Netzen in einem Datenkommunikationskanal übertragen, der Gemäß Standard G.707 mit DCC abgekürzt wird und der Teil des sogenannten Section-overheads ist, siehe z.B. Standard G.707, Abschnitt 9.2.2.7.

Die Erfindung betrifft außerdem eine Weiterleitungseinheit, insbesondere eine Netzübergangseinheit, die so aufgebaut ist, dass bei ihrem Betrieb die auf die Bezugs-Weiterleitungseinheit bezogenen Verfahrensschritte des erfindungsgemäßen Verfahrens oder eine seiner Weiterbildungen ausgeführt werden. Weiterhin betrifft die Erfindung ein Programm mit einer Befehlsfolge, bei deren Ausführung durch einen Prozessor das erfindungsgemäße Verfahren oder eine seiner Weiterbildungen ausgeführt werden. Damit gelten die oben genannten technischen Wirkungen auch für die Weiterleitungseinheit und für das Programm.

Im Folgenden werden Ausführungsbeispiele der Erfindung an Hand der beiliegenden Zeichnungen erläutert. Darin zeigen:
Figur 1 ein Datenübertragungssystem mit zwei Domänen, und
Figur 2 ein eingekapseltes Datenpaket.

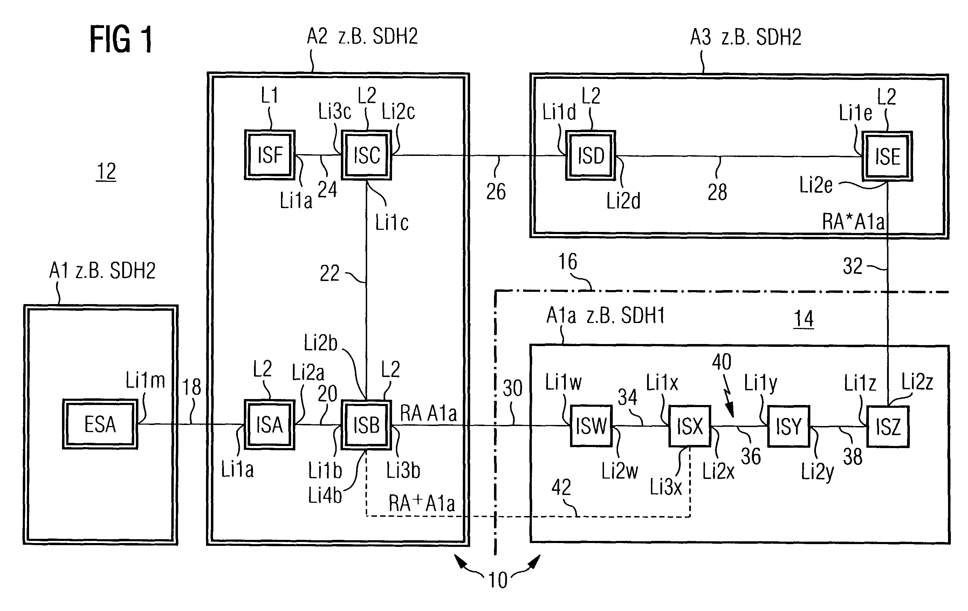

Figur 1 zeigt ein Datenübertragungssystem 10 mit zwei Domänen 12 und 14, deren Grenze 16 durch eine gestrichelte Linie dargestellt ist. In den Domänen 12 und 14 werden die Nutzdaten gemäß Standard G.707 der ITU-T übertragen, d.h. die Domänen 12 und 14 sind SDH-Netze (Synchronous Digital Hierarchy), die eine Zeitrahmenstruktur verwenden, in der verschieden Transportmodule eingebettet werden können. Die Domänen 12 und 14 bilden unterschiedliche administrative Einheiten. Außerdem unterscheiden sich die Routing-Verfahren in den Domänen 12 und 14. In der Domäne 12 wird ein dynamisches Routing-Verfahren gemäß Standard ISO 10589 eingesetzt, vergleiche Doppelllinien in Figur 1. In der Domäne 14 wird dagegen ein statisches Routing-Verfahren eingesetzt, bei dem Einträge in Routing-Tabellen manuell eingetragen werden.

Die Domäne 12 enthält drei Areas A1 bis A3, die den im Standard ISO 10589, Abschnitt 3.6.1, erläuterten Areas entsprechen. Die Area A1 enthält einen Netzverwaltungsrechner ESA (Endsystem A), der Routing-Funktionen des Niveaus L2 gemäß Standard ISO 10589 erfüllt. Der Netzverwaltungsrechner ESA ist über eine Übertragungsstrecke 18 mit einem Weiterleitungsrechner ISA (Intermediate System) verbunden, der in der Area A2 liegt. In der Area A2 liegen außerdem Weiterleitungsrechner ISB, ISC und ISF. Die Weiterleitungsrechner ISA und ISB sind über eine Übertragungsstrecke 20 verbunden. Eine Übertragungsstrecke 22 verbindet die Weiterleitungsrechner ISB und ISC. Zwischen den Weiterleitungsrechnern ISC und ISF liegt eine Übertragungsstrecke 24. Die Weiterleitungsrechner ISA, ISB und ISC sind Weiterleitungsrechner des Niveaus L2 gemäß Standard ISO 10589, d.h. diese Weiterleitungsrechner dienen zum Weiterleiten von Datenpaketen zwischen Areas. Der Weiterleitungsrechner ISF ist dagegen ein Weiterleitungsrechner des Niveaus L1 gemäß Standard ISO 10589, d.h. mit diesem Weiterleitungsrechner ISF lassen sich nur Datenpakete innerhalb der Area A2 weiterleiten.

Vom Weiterleitungsrechner ISC führt eine Übertragungsstrecke 26 zu einem Weiterleitungsrechner ISD, der in der Area A3 liegt. Außerdem ist in Figur 1 ein Weiterleitungsrechner ISE dargestellt, der ebenfalls in der Area A3 liegt. Die beiden Weiterleitungsrechner ISD und ISE sind über eine Übertragungsstrecke 28 verbunden.

In Figur 1 sind zwei Übergänge von der Domäne 12 in die Domäne 14 dargestellt, nämlich über eine vom Weiterleitungsrechner ISB ausgehende Übertragungsstrecke 30, die zu einem Weiterleitungsrechner ISW in einem Systembereich A1a führt, welcher die Domäne 14 bildet. Eine Übertragungsstrecke 32 führt vom Weiterleitungsrechner ISE zu einem Weiterleitungsrechner ISZ, der sich ebenfalls in dem Systembereich A1a befindet. In Figur 1 sind außerdem noch zwei weitere Weiterleitungsrechner ISX und ISY dargestellt, die in dem Systembereich A1a liegen. Eine Übertragungsstrecke 34 verbindet den Weiterleitungsrechner ISW mit dem Weiterleitungsrechner ISX. Zwischen den Weiterleitungsrechnern ISX und ISY liegt eine Übertragungsstrecke 36. Eine weitere Übertragungsstrecke 38 verbindet die Weiterleitungsrechner ISY und ISZ.

In Figur 1 sind außerdem Links Li dargestellt, die den von einem Weiterleitungsrechner ISA bis ISZ abgehenden Übertragungsstrecken zugeordnet sind und diese bezeichnen. Die Links Li eines Weiterleitungsrechners werden durchnummeriert. Außerdem ist dem Link ein Kleinbuchstabe nachgestellt, der auf den jeweiligen Weiterleitungsrechner hinweist. So hat beispielsweise der Weiterleitungsrechner ISA einen Link Li1a zur Übertragungsstrecke 18 hin und einen Link Li2a zur Übertragungsstrecke 20 hin.

Die Weiterleitungsrechner ISA bis ISZ sind jeweils einem Netzwerk zugeordnet und verbinden die Netzwerke untereinander. Die Netzwerke arbeiten auf der untersten Protokollschicht nach verschiedenen Protokollen, z.B. gemäß Ethernet-Protokoll oder gemäß Token-Ring-Protokoll.

Zwischen dem Netzverwaltungsrechner ESA und dem Weiterleitungsrechner ISY soll eine Datenübertragungsverbindung aufgebaut werden, um beispielsweise eine Datei vom Weiterleitungsrechner ISY zum Netzverwaltungsrechner ESA zu übertragen. Die Domäne 12 befindet sich in einem sogenannten konvergierten Zustand, in welchem sich die in Figur 1 dargestellten Weiterleitungsrechner ISA bis ISF über sogenannte Hallo-Protokolldatenpakete (PDU-protocol data unit) bekannt gemacht haben. Außerdem wurden Routing-Daten mit Hilfe von Verbindungszustandspaketen (LSP - Link-state-PDU) ausgetauscht. Dadurch hat jeder Weiterleitungsrechner ISA bis ISE eine Sichtweise auf die gesamte Domäne 12 bezogen auf das Niveau L2. Der Weiterleitungsrechner ISF hat nur eine auf die Area A2 bezogene Sicht, d.h. eine auf das Niveau L1 bezogene Sicht. Die Weiterleitungsrechner ISA bis ISE haben für ihre jeweilige Area A2 bzw. A3 auch eine Netzsicht auf dem Niveau L1.

Der Austausch der Netzzustandsinformationen erfolgt dynamisch, d.h. ohne manuellen Eingriff. Durch einen manuellen Eingriff oder durch ein sogenanntes Inter-Domäne-Routing-Protokoll wurden außerdem im Weiterleitungsrechner ISB und im Weiterleitungsrechner ISE sogenannte erreichbare Adress-Präfixe RA in die Routing-Tabellen eingetragen.

Ein Präfix RA A1a in der Routing-Tabelle des Weiterleitungsrechners ISB betrifft die Übertragungsstrecke 30, d.h. den ersten Übergang zur Domäne 14. Ein Präfix RA* A1a in der Routing-Tabelle des Weiterleitungsrechners ISE betrifft die Übertragungsstrecke 32, d.h. den zweiten Übergang zwischen den Domänen 12 und 14. Zu jedem Präfix RA A1a und RA* A1a wurde vermerkt, dass eine externe Domäne betroffen ist, d.h. ein Parameter "externe Domäne" hat den Wert "true".

Die Routing-Tabellen für die Weiterleitungsrechner ISW bis ISZ, d.h. für die Weiterleitungsrechner der Area A1a, wurden manuell erstellt, d.h. mit einem sogenannten statischen Routing-Verfahren. Eine Störung 40 auf der Übertragungsstrecke 36 ist in den Routing-Tabellen der Weiterleitungsrechner ISW bis ISZ deshalb nicht berücksichtigt. Die Weiterleitungsrechner ISA bis ISE der Domäne 12 haben auf die Übertragungsstrecke 36 keine Sicht und können deshalb die Störung 40 nicht berücksichtigen.

Ein vom Netzverwaltungsrechner ESA kommendes Verbindungsaufbaupaket zum Aufbau der Datenübertragungsverbindung wird zunächst über die Übertragungsstrecke 18, den Weiterleitungsrechner ISA und die Übertragungsstrecke 20 zum Weiterleitungsrechner ISB weitergeleitet. Für die Übertragung des Datenpaketes wird der Datenkommunikationskanal DCC verwendet, der im sogenannten Section-overhead SOH des SDH-Rahmens liegt. Im Weiterleitungsrechner ISB wird an Hand der im Verbindungsaufbaupaket enthaltenen Zieladresse, nämlich der Adresse des Weiterleitungsrechners ISY festgestellt, dass dieser Adresse der erreichbare Adresss-Präfix RA A1a einer externen Domäne zugeordnet ist. Deshalb wird das Verbindungsaufbaupaket über die Übertragungsstrecke 30 in den Systembereich A1a, d.h. in die externe Domäne weitergeleitet. Der Weiterleitungsrechner ISW leitet das Verbindungsaufbaupaket über die Übertragungsstrecke 34 zur Weiterleitungseinheit ISX weiter. In der Weiterleitungseinheit ISX wurde die Störung 40 auf der Übertragungsstrecke 36 erfasst. Deshalb wird das ankommende Verbindungsaufbaupaket über die Übertragungsstrecke 30 an den Absender, d.h. an den Weiterleitungsrechner ISB zurückgeleitet. Dabei wird eine Regel angewandt, nach der die nächste Übertragungsstrecke genutzt wird, die bei einer Linksdrehung erreicht wird. Eine Prüfung ob dies die Übertragungsstrecke ist, auf der das Datenpaket angekommen ist, findet innerhalb einer Domäne nicht statt. Der Weiterleitungsrechner ISW leitet das Verbindungsaufbaupaket über die Übertragungsstrecke 30 zum Weiterleitungsrechner ISB hin. Der Weiterleitungsrechner ISB würde ohne die im Folgenden erläuterten Verfahrensschritte das Verbindungsaufbaupaket erneut in den Systembereich A1a übertragen, weil ihm die Störung 40 verborgen bleibt.

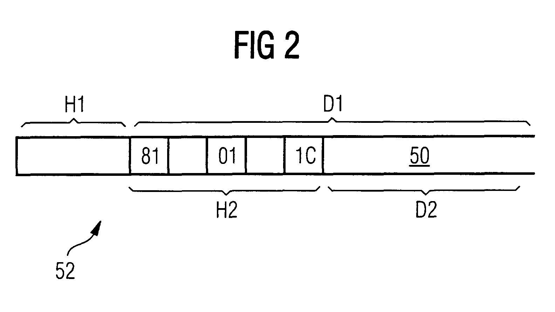

Jedoch wird im Weiterleitungsrechner ISB geprüft, auf welcher Übertragungsstrecke das Verbindungsaufbaupaket empfangen worden ist. Dies ist nach der Rückleitung des Verbindungsaufbaupaketes die Übertragungsstrecke 30. Nach dem Ermitteln der Ziel-Weiterleitungseinheit ISY und dem Ermitteln der dorthin führenden Übertragungsstrecke 30 wird in der Weiterleitungseinheit ISB festgestellt, dass das Verbindungsaufbaupaket erneut über die Übertragungsstrecke 30 zu senden wäre. Um jedoch eine Übertragungsschleife zu vermeiden, wird eine Umgehung gesucht. In der Niveau L2-Datenbank des Weiterleitungsrechners ISB wird eine andere Area gesucht, das in der eigenen Domäne liegt, d.h. in der Domäne 12, und das als erreichbaren Adress-Präfix einen Eintrag auf den Systembereich A1a enthält und somit auf eine externe Adresse verweist. In der Weiterleitungseinheit ISB wird ermittelt, dass dies für die Weiterleitungseinheit ISE zutrifft, weil deren Präfix RA* A1a in den Systembereich A1a zeigt. Das Verbindungsaufbaupaket wird, so wie unten an Hand der Figur 2 erläutert, eingekapselt und an den ermittelten Weiterleitungsrechner ISE adressiert. Anschließend wird das eingekapselte Verbindungsaufbaupaket über die Übertragungsstrecke 22, den Weiterleitungsrechner ISC, die Übertragungsstrecke 26, den Weiterleitungsrechner ISD und die Übertragungsstrecke 28 zum Weiterleitungsrechner ISE weitergeleitet.

Im Weiterleitungsrechner ISE wird aufgrund der Zieladresse festgestellt, dass das eingekapselte Verbindungsaufbaupaket sein Ziel erreicht hat. An Hand eines Headers wird erkannt, dass es sich um ein eingekapseltes Verbindungsaufbaupaket handelt. Das Verbindungsaufbaupaket wird entkapselt, und es wird auf Grund der Zieladresse des Verbindungsaufbaupaketes, d.h. auf Grund der Adresse des Weiterleitungssystems ISY, die Übertragungsstrecke 32 als die für die weitere Übertragung zu nutzende Übertragungsstrecke ermittelt. Anschließend wird das Verbindungsaufbaupaket von dem Weiterleitungsrechner ISE zum Weiterleitungsrechner ISZ über die Übertragungsstrecke 32 übertragen. Der Weiterleitungsrechner ISZ überträgt das Verbindungsaufbaupaket über die Übertragungsstrecke 38 zum Zielrechner ISY. Damit konnte das Verbindungsaufbaupaket trotz der Störung 40 zu seinem Ziel weitergeleitet werden. Gemäß SDH-Protokoll wird eine Nutzdatenverbindung zwischen dem Netzverwaltungsrechner ESA und dem Weiterleitungsrechner ISY aufgebaut. Die Nutzdatenverbindung wird auf Grund der Störung 40 unter Einbeziehung der Areas A2 und A3 aufgebaut.

Bei einem anderen Ausführungsbeispiel gibt es zusätzlich zu den bereits erläuterten Übertragungsstrecken 18 bis 38 noch eine Übertragungsstrecke 42 zwischen dem Weiterleitungsrechner ISB und dem Weiterleitungsrechner ISY. Damit verbindet auch die Übertragungsstrecke 42 die Domäne 12 mit der Domäne 14, bzw. genauer die Area A2 mit dem Systembereich Ala. Beim zweiten Ausführungsbeispiel wird nach dem Empfang des über die Übertragungsstrecke 30 zurückgeleiteten Verbindungsaufbaupaketes ein erreichbarer Adress-Präfix RA+ A1a ermittelt, der auf die Übertragungsstrecke 42 verweist. Das Verbindungsaufbaupaket wird deshalb über die Übertragungsstrecke 42 zum Weiterleitungsrechner ISX weitergeleitet. Von dort gelangt das Verbindungsaufbaupaket jedoch auf Grund der Störung 40 wieder über die Übertragungsstrecke 42 zum Weiterleitungsrechner ISB zurück. Erst danach wird das Verbindungsaufbaupaket, wie oben bereits erläutert, eingekapselt und an den Weiterleitungsrechner ISE weiter geleitet.

Figur 2 zeigt das eingekapselte Verbindungsaufbaupaket 50 als Bestandteil eines Datenpaketes 52. Das Datenpaket 52 enthält einen Adressteil H1, in dem als Zieladresse die Adresse des Weiterleitungsrechners ISE angegeben ist. In einem Datenteil D1 ist ein Kopfteil H2 enthalten, der im ersten, dritten und fünften Byte die hexadezimalen Werte "81", "01" und "1C" enthält. Gemäß Standart ISO 8473 ist dies eigentlich die Kennzeichnung für ein Datenpaket der Schicht Vier des OSI-Modells (Open System Interconnection). Weiterhin enthält der Datenteil D1 das Verbindungsaufbaupaket 50 als Datenteil D2.

Beim Empfang des Datenpaketes 52 in dem Weiterleitungsrechner ISE wird in einem Programm, das Funktionen der Schicht Drei des OSI-Modells erfüllt, auf Grund des Kopfteils H2 festgestellt, dass ein eingekapseltes Datenpaket 50 vorliegt. Beim Entkapseln wird der Kopfteil H2 entfernt. Anschließend wird das Datenpaket 50 weitergeleitet. Dabei wird ein in Figur 2 nicht dargestellter Adressteil des Datenpaketes 50 ausgewertet.

Das Einkapseln eines Datenpaketes ist im Standard ISO/IEC 10589 im Zusammenhang mit einem "partition repair" genannten Verfahren erläutert, siehe Abschnitt 7.2.10. Jedoch wird das "partition repair"-Verfahren gemäß dem genannten Standard nur innerhalb einer Domäne, z.B. der Domäne 12 durchgeführt, um eine innerhalb der Domäne 12 auftretende Störung zu umgehen. Beim erfindungsgemäßen Verfahren wird dagegen die Störung in einer anderen Domäne umgangen. Bei der Suche nach einer Umgehung wird gemäß Standard ISO/IEC 10589 ein Weiterleitungsrechner in der eigenen Area, d.h. z.B. in der Area A2 für den Weiterleitungsrechner ISB, bestimmt, an den das Datenpaket eingekapselt weitergeleitet wird. Beim erfindungsgemäßen Verfahren wird dagegen wie oben an Hand der Figur 1 ein Weiterleitungsrechner in einer anderen Area gesucht, z.B. in der Area A3, derselben Domäne 12.

Bei einem anderen Ausführungsbeispiel wird dieselbe Netzstruktur genutzt, wie sie oben an Hand der Figur 1 erläutert worden ist. Jedoch wird in dem Systembereich A1a ein dynamisches Routing-Verfahren mit Distanzvektor eingesetzt. Damit kann die Störung 40 innerhalb des Systembereiches A1a bekannt gemacht werden. Jedoch wird die Störung 40 nicht in der Domäne 12 bekannt. Die oben erläuterten Vorgänge laufen auf ähnliche Weise ab. Jedoch wird das Verbindungsaufbaupaket bereits vom Weiterleitungsrechner ISW an den Weiterleitungsrechner ISB zurückgeleitet, ohne dass es bis zum Weiterleitungsrechner ISX gelangt.

### Bezugszeichenliste

- 10: Datenübertragungssystem
- 12, 14: Domäne
- 16: Grenze
- A1 bis A3: Area
- A1a: Systembereich
- ESA: Netzverwaltungsrechner
- 18 bis 38: Übertragungsstrecke
- ISA bis ISZ: Weiterleitungsrechner
- Li1a, Li2a: Link
- Lilb bis Li2z: Link
- RA A1a, RA* A1a: erreichbarer Adress-Präfix
- 40: Störung
- 42: Übertragungsstrecke
- 50: Verbindungsaufbaunachricht
- D1, D2: Datenteil
- 52: Datenpaket
- H1: Adressteil
- H2: Kopfteil

## Patentansprüche

1. Verfahren zum Weiterleiten von Datenpaketen (50),
bei dem eine Bezugs-Weiterleitungseinheit (ISB) Datenpakete an eine Nachbar-Weiterleitungseinheit (ISW) weiterleitet, die an Hand von in einem Datenpaket (50) enthaltenen Lenkdaten gemäß einem ersten Weiterleitungsverfahren ermittelt wird, bei dem in der Bezugs-Weiterleitungseinheit (ISB) ein Datenpaket (50) empfangen wird,
bei dem in der Bezugs-Weiterleitungseinheit (ISB) an Hand der in dem Datenpaket (50) enthaltenen Lenkdaten gemäß dem ersten Weiterleitungsverfahren eine Weiterleitungseinheit ermittelt wird,
und bei dem das Datenpaket (50) nur dann an die ermittelte Weiterleitungseinheit übertragen wird, wenn die ermitteltet Weiterleitungseinheit nicht die Nachbar-Weiterleitungseinheit (ISW) ist.

2. Verfahren nach Anspruch 1, **dadurch gekennzeichnet, dass** in der Bezugs-Weiterleitungseinheit (ISB) automatisch geprüft wird, ob die ermittelte Weiterleitungseinheit die Nachbar-Weiterleitungseinheit (ISW) oder eine andere Weiterleitungseinheit ist,
und dass das Datenpaket abhängig vom Prüfergebnis nur dann an die Nachbar-Weiterleitungseinheit übertragen wird, wenn die ermittelte Weiterleitungseinheit nicht die Nachbar-Weiterleitungseinheit (ISW) ist.

3. Verfahren nach einem der vorhergehenden Ansprüche, **dadurch gekennzeichnet, dass** die Bezugs-Weiterleitungseinheit (ISB) eine Übergangseinheit zwischen verschiedenen Domänen (12, 14) ist, in denen voneinander verschiedene oder voneinander unabhängige Verfahren zur Erzeugung von Weiterleitungsdaten und/oder zum Weiterleiten ausgeführt werden.

4. Verfahren nach Anspruch 3, **dadurch gekennzeichnet, dass** vorzugsweise abhängig vom Prüfergebnis in dem Fall, dass die ermittelte Weiterleitungseinheit die Nachbar-Weiterleitungseinheit (ISW) ist, gemäß dem ersten Weiterleitungsverfahren an Hand der im Datenpaket (50) enthaltenen Lenkdaten eine sich von der Nachbar-Weiterleitungseinheit unterscheidende zweite Nachbar-Weiterleitungseinheit (ISX) ermittelt wird, die sich in derselben Domäne (14) wie die erste Nachbar-Weiterleitungseinheit (ISW) befindet.

5. Verfahren nach Anspruch 3 oder 4, **dadurch gekennzeichnet, dass** vorzugsweise abhängig vom Prüfergebnis in dem Fall, dass die ermittelte Weiterleitungseinheit die Nachbar-Weiterleitungseinheit (ISW) ist, gemäß einem sich vom ersten Weiterleitungsverfahren unterscheidenden Verfahren an Hand der Lenkdaten eine alternative Übergangs-Weiterleitungseinheit (ISE) ermittelt wird, die in derselben Domäne (12) wie die Bezugs-Weiterleitungseinheit (ISB) liegt und die eine Netzübergangseinheit zu einer Domäne (14) ist, in der auch die erste Nachbar-Weiterleitungseinheit (ISW) liegt.

6. Verfahren nach Anspruch 5, **dadurch gekennzeichnet, dass** das Datenpaket (50) eingekapselt von der Bezugs-Weiterleitungseinheit (ISB) an die alternative Übergangs-Weiterleitungseinheit (ISE) übertragen wird,
und dass die alternative Übergangs-Weiterleitungseinheit (ISE) das Datenpaket (50) entkapselt und gemäß einem Weiterleitungsverfahren weiterleitet, das vorzugsweise gleich dem ersten Weiterleitungsverfahren ist.

7. Verfahren nach einem der vorhergehenden Ansprüche, **dadurch gekennzeichnet, dass** die Bezugs-Weiterleitungseinheit (ISB) und die alternative Übergangs-Weiterleitungseinheit (ISE) in einem Datenübertragungsnetz und/oder in einer Domäne(12) angeordnet sind, in welchem oder in welcher Weiterleitungsdaten gemäß Standard ISO 10589 erzeugt und/oder Datenpakete gemäß Standard ISO 10589 weiter geleitet werden.

8. Verfahren nach einem der vorhergehenden Ansprüche, **dadurch gekennzeichnet, dass** die Bezugs-Weiterleitungseinheit (ISB) und die Übergangs-Weiterleitungseinheit (ISE) in einer Domäne mit dynamischem Routing liegen, vorzugsweise in verschiedenen Areas (A2, A3), welche den Austausch von Nachrichten zur Erzeugung der Weiterleitungsdaten beschränken,
und dass die Nachbar-Weiterleitungseinheit (ISW) oder die Nachbar-Weiterleitungseinheiten (ISW, ISX) in einer Domäne mit statischem Routing liegen.

9. Verfahren nach einem der vorhergehenden Ansprüche, **dadurch gekennzeichnet, dass** die Weiterleitungseinheiten in der Domäne mit dynamischen Routing und/oder die Weiterleitungseinheiten in der Domäne mit statischem Routing über ein SDH-Netz verbunden sind,
und dass die Datenpakete in einem Daten-Kommunikationskanal des SDH-Netzes übertragen werden.

10. Weiterleitungseinheit (ISB, ISE), insbesondere Netzübergangseinheit, **dadurch gekennzeichnet, dass** die Weiterleitungseinheit (ISB, ISE) so aufgebaut ist, dass bei ihrem Betrieb die auf die Bezugs-Weiterleitungseinheit (ISB) und/oder die auf die Übergangs-Weiterleitungseinheit (ISE) bezogenen Verfahrensschritte nach einem der Ansprüche 1 bis 9 ausgeführt werden.

11. Programm mit einer Befehlsfolge, bei deren Ausführung durch einen Prozessor ein Verfahren gemäß einem der Ansprüche 1 bis 9 ausgeführt oder die Funktion einer Einheit nach Anspruch 10 erbracht wird.
